(19) Europäisches Patentamt
European Patent Office
Office européen des brevets

(11) **EP 2 721 722 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **12747902.0**

(22) Anmeldetag: **20.07.2012**

(51) Int Cl.:
*H02K 1/04* (2006.01)  *H02K 1/06* (2006.01)
*H02K 1/14* (2006.01)  *H02K 1/20* (2006.01)

(86) Internationale Anmeldenummer:
**PCT/EP2012/064338**

(87) Internationale Veröffentlichungsnummer:
**WO 2013/014103 (31.01.2013 Gazette 2013/05)**

(54) **ELEKTRISCHE MASCHINE MIT MASSENARMER BAUART IN MAGNETISCH AKTIVEN TEILEN**

ELECTRIC MACHINE HAVING A LOW-MASS DESIGN IN MAGNETICALLY ACTIVE PARTS

MACHINE ÉLECTRIQUE À FAIBLE MASSE DANS DES PARTIES MAGNÉTIQUEMENT ACTIVES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2011 DE 102011079843**

(43) Veröffentlichungstag der Anmeldung:
**23.04.2014 Patentblatt 2014/17**

(73) Patentinhaber: **Siemens Aktiengesellschaft 80333 München (DE)**

(72) Erfinder:
• **JAJTIC, Zeljko 80992 München (DE)**
• **MATSCHEKO, Gerhard 82319 Starnberg (DE)**

(56) Entgegenhaltungen:
EP-A1- 2 375 545     EP-A2- 0 237 848
EP-A2- 0 291 638     JP-A- S63 121 466
US-A- 5 420 471      US-A- 5 864 196
US-A1- 2001 030 486  US-A1- 2011 140 552

**Beschreibung**

Die Erfindung betrifft eine elektrische Maschine gemäß dem Oberbegriff des Patentanspruchs 1, einen magnetischen Polteil gemäß dem Oberbegriff des Patentanspruchs 11, ein Fahrzeug und eine Windkraftanlage sowie ein Verfahren zur Herstellung einer elektrischen Maschine gemäß dem Oberbegriff des Patentanspruchs 14.

Elektrische Maschinen gemäß dem Oberbegriff des Patentanspruchs 1 können als Antriebsmotor oder als Generator eingesetzt werden. Ein Grund für den vermehrten Einsatz elektrischer Maschinen als Antriebsmotor ist, dass für die herkömmlichen Verbrennungsmotoren aufgrund der Verknappung der fossilen Brennstoffe eine Alternative gefunden werden muss. Es wird dabei als Ersatz für die fossilen Brennstoffe auf regenerative Energiequellen gesetzt. Da eine regenerative Energiequelle zeitlich und örtlich nicht immer verfügbar ist, muss man die regenerative Energie in eine transportier- und speicherbare Energieform umwandeln. Als Energieform hat sich hier die elektrische Energie etabliert. Elektrische Energie lässt sich aus den regenerativen Energiequellen mithilfe von elektrischen Maschinen, die als Generatoren arbeiten, gewinnen, mithilfe von Leitungen transportieren, in Batterien zwischenspeichern und mithilfe von Motoren mit hohem Wirkungsgrad in Bewegungsenergie umwandeln. Die Generatoren sind dabei in Tragkonstruktionen befestigt, die den Naturkräften der regenerativen Energiequellen widerstehen müssen. Die Motoren müssen leistungsstark, aber auch effektiv in mobilen Anwendungen einsetzbar sein. Für den Einsatz einer elektrischen Maschine als Generator oder Motor ist eine möglichst hohe Leistungsdichte wünschenswert, da man eine möglichst hohe abgebbare Leistung im Verhältnis zur Masse des Elektromotors möchte. Denn umso geringer die Masse des Generators, desto kostengünstiger kann das Traggestell hergestellt werden. Bei dem Motor in der mobilen Anwendung, wie etwa in einem Fahrzeug, kann durch die geringere bewegte Masse Energie eingespart werden und somit das Fahrzeug kostengünstig betrieben werden.

Bisher wurde hierzu im magnetisch aktiven Teil der elektrischen Maschine durch Optimierung der Blechschnittgeometrie und der Auswahl geeigneter Materialien für die Bleche eine Reduzierung der Masse in einem oftmals nicht zufriedenstellenden Maße erreicht.

So wird in der Zeitschrift "antriebstechnik 5/2011" auf den Seiten 68-70 von den Autoren Brand, Stahel und Vezzini ein Hochleistungs-Permanentmagnetmotor beschrieben, bei dem in Stator und Rotor Bleche aus Kobalt-Eisen-Werkstoffen eingesetzt werden. Der Artikel beschreibt primär den Wunsch nach einem höheren Drehmoment, der mit Blechen aus einer Kobalt-Eisen-Legierung mit einer Sättigungspolarisation von 2,35 Tesla gegenüber einem Silizium-Eisen-Werkstoff mit einer Sättigungspolarisation von 2,03 Tesla erfüllt wird. Das maximale Drehmoment konnte dabei um 22% gesteigert werden. Im letzten Absatz des Artikels wird angesprochen, dass anstelle der Erhöhung des maximalen Drehmoments das Volumen und somit das Gewicht des Motors bei gleichem maximalen Drehmoment verringert werden kann.

Der genannte Artikel beschreibt zwar, dass Kobalt-Eisen-Legierungen in der Luftfahrtindustrie aus Gründen der Gewichtsreduzierung bereits seit Jahrzehnten etabliert sind, jedoch ist die durch den Einsatz von Kobalt-Eisen-Legierungen erreichte Gewichtsreduzierung für viele Anwendungen noch nicht ausreichend. Das Dokument EP 0 237 848 schlägt zur Gewichtsreduzierung den Aufbau eines Blechpakets mit magnetisch aktiven und inaktiven Schichten, die sich regelmäßig abwechseln.

Der Erfindung liegt daher die Aufgabe zugrunde, die elektrische Maschine so zu verbessern, dass eine weitere Verringerung der Masse der magnetisch aktiven Teile bei gleicher Leistungsfähigkeit der elektrischen Maschine erreicht wird.

Diese Aufgabe wird durch eine elektrische Maschine mit den Merkmalen gemäß Anspruch 1 gelöst.

Die erfindungsgemäße elektrische Maschine umfasst

- einen ersten magnetischen Pol, der eine Anordnung von Schichten aufweist, die magnetisch aktive Schichten mit einem Gesamtvolumen $V_a$ umfasst,
- einen zweiten magnetischen Pol, wobei der erste magnetische Pol und der zweite magnetische Pol relativ zueinander bewegbar sind, und
- einen Spalt, der eine Länge $l_s$ in einer Richtung parallel zu einer der Schichten von einem den Spalt begrenzenden Ende des ersten magnetischen Pols zu einem den Spalt begrenzenden Ende des zweiten magnetischen Pols aufweist,
- einen elektrischen Leiter als Koppelelement zwischen einem elektrischen Stromkreis und einem magnetischen Kreis,

wobei in einem Betriebszeitpunkt der magnetische Kreis den ersten magnetischen Pol, den Spalt mit der Länge $l_s$ und den zweiten magnetischen Pol umfasst, die von einem gemeinsamen magnetischen Nutzfluss zur elektromechanischen Energieumwandlung durchflutet werden, wobei die Anordnung magnetisch inaktive Schichten mit einem Gesamtvolumen $V_i$ umfasst, die eine geringere mittlere Massedichte als die magnetisch aktiven Schichten aufweisen, und eine Reihenfolge in der Anordnung der magnetisch inaktiven Schichten und der magnetisch aktiven Schichten im Wesentlichen durch eine Wiederholung einer Periode p vorgegeben ist, die eine festgelegte Folge von magnetisch aktiven Schichten und magnetisch inaktiven Schichten aufweist, wobei ein räumliche Anteil k, der durch die Gleichung

$$k \ = \ V_a \ / \ ( \ V_a + V_i \ ) ;$$

definiert ist, die Bedingung

$$0,5 \ \leq \ k \ \leq \ 0,8;$$

erfüllt.

Die elektrische Maschine umfasst den ersten magnetischen Pol. Ein magnetischer Pol, insbesondere der erste magnetische Pol oder der zweite magnetische Pol, ist ein Ort, in dessen Umgebung die magnetische Feldstärke besonders hoch ist. Dies wird dadurch erreicht, dass der magnetische Pol einen Permanentmagneten umfasst oder ein Material umfasst, das magnetisch besser leitend ist als die Umgebung des magnetischen Pols. Bevorzugt umfasst deshalb der erste magnetische Pol oder auch der zweite magnetische Pol ferromagnetische Materialien wie zum Beispiel Eisen, Kobalt, Nickel oder Ferrite, um das Magnetfeld im magnetischen Pol zu konzentrieren. Die relative Permeabilitätszahl ferromagnetischer Stoffe ist deutlich größer als 1. Die Ferrite haben z.B. eine relative Permeabilitätszahl von 4. Der bevorzugte Einsatz von Eisen ist darin begründet, dass Eisen eine relative Permeabilitätszahl von größer als 300 hat. In der Regel werden Eisen-Werkstoffe oder Eisenlegierungen mit speziellen Eigenschaften, wie zum Beispiel Eisen-Silizium-Legierungen oder Eisen-Kobalt-Legierungen für magnetische Pole verwendet. Magnetische Pole können darüber hinaus mit Hilfe bestromter Spulen erzeugt werden.

Der erste magnetische Pol umfasst die Anordnung von Schichten, die magnetisch aktive Schichten umfasst. Unter der magnetisch aktiven Schicht versteht man eine Schicht, die ferromagnetische Materialien umfasst. Eine Anordnung in Schichten ist vorteilhaft, um bei einem sich schnell ändernden magnetischen Fluss im ersten magnetischen Pol oder auch im zweiten magnetischen Pol Wirbelstromverluste zu vermeiden.

Damit durch eine elektrische Maschine eine elektromechanische Energieumwandlung erfolgen kann, umfasst die elektrische Maschine mindestens den ersten und den zweiten magnetischen Pol, die relativ zueinander bewegbar sind und durch den Spalt beabstandet sind.

Weiterhin ist es notwendig, dass mindestens ein elektrischer Leiter als Koppelelement zwischen dem elektrischen Stromkreis und dem magnetischen Kreis vorhanden ist.

Insbesondere umfasst der elektrische Leiter mehrere Windungen, damit eine höhere Koppelung zwischen dem elektrischen Stromkreis und dem magnetischen Kreis vorhanden ist. Der magnetische Kreis umfasst in einem Betriebszeitpunkt den ersten magnetischen Pol, den Spalt mit einer Länge $l_s$ und den zweiten magnetischen Pol, die von einem gemeinsamen magnetischen Nutzfluss zur elektromechanischen Energieumwandlung durchflutet werden.

Der elektrische Leiter umgibt beispielsweise den ersten magnetischen Pol oder den zweiten magnetischen Pol, insbesondere in Form von Windungen. Die Windungen sind Bestandteil einer Wicklung.

Die elektrische Maschine umfasst bevorzugt weitere magnetische Pole. Somit können die Wicklungen um weitere magnetische Pole geführt sein. Die Wicklungen können als verteilte Wicklungen oder als konzentrierte Wicklung ausgebildet sein. Konzentrierte Wicklungen haben unter anderem den Vorteil, dass sie gegenüber verteilten Wicklungen weniger Bauraum beanspruchen.

Der erste magnetische Pol oder der zweite magnetische Pol ist insbesondere in der Weise zu den weiteren magnetischen Polen angeordnet, dass die magnetisch aktiven Schichten des ersten magnetischen Pols oder des zweiten magnetischen Pols in einer Ebene mit magnetisch aktiven Schichten der weiteren Pole liegen.

Ist der erste magnetische Pol als Zahn ausgebildet, kann eine konzentrierte Wicklung als Zahnspule ausgebildet sein. Vorteilhaft an der Verwendung von Zahnspulen ist, dass ein Joch, das den ersten magnetischen Pol mit weiteren magnetischen Polen verbindet, die als Zähne ausgeführt sind, dünner als der Zahn des ersten magnetischen Pols oder der weiteren magnetischen Pole ausgeführt ist. Man benötigt somit weniger magnetisch aktives Material.

Bei einer verteilten Wicklung weist ein Pol wenigstens zwei Zähne auf, die von der Wicklung umgeben werden.

Analog gilt dies auch für den zweiten magnetischen Pol, wenn dieser mit weiteren magnetischen Polen verbunden ist.

Ist der erste oder der zweite magnetisch Pol mit weiteren Zähnen verbunden, so kann in einem Zwischenraum zwischen zwei Zähnen die elektrischen Leiter zweier verschiedener Zahnspulen (Zweischichtwicklung) oder nur einer Zahnspule (Einschichtwicklung) angeordnet sein.

Der erste magnetische Pol kann Bestandteil eines Stators sein und der zweite magnetische Pol Bestandteil eines Rotors. Der erste magnetische Pol und der zweite magnetische Pol sind durch den Spalt der Länge $l_s$ voneinander beabstandet; die Länge $l_s$ ist dabei in einer Richtung parallel zu einer der Schichten von einem den Spalt begrenzenden Ende des ersten magnetischen Pols zu einem den Spalt begrenzenden Ende des zweiten magnetischen Pols gemessen. Insbesondere ist das den Spalt begrenzenden Ende des ersten magnetischen Pols eine erste Grenzfläche, die den ersten magnetischen Pol begrenzt und das den Spalt begrenzenden Ende des zweiten magnetischen Pols eine zweite Grenzfläche, die den zweiten magnetischen Pol begrenzt. Die Länge des Spaltes $l_s$ ist dann als Abstand der ersten Grenzfläche von der zweiten Grenzfläche gegeben. Der erste magnetische Pol und der zweite magnetische Pol sind so gegeneinander gelagert, dass sie bei einer Ausgestaltung der elektrischen Maschine als Linearmaschine, in einer Ebene oder auf einer Gerade durch den Spalt der Länge $l_s$ beabstandet gegeneinander verschiebbar und damit bewegbar sind. In einer Ausgestaltung der elektrischen Maschine als rotierender elektrischer Maschine ist der Rotor in den meisten Fällen konzentrisch zum Stator drehbar gelagert. Der Stator kann dabei den ersten und der Rotor den zweiten magnetischen Pol umfassen. Es ist auch möglich, dass der Rotor den ersten und der Stator den zweiten magnetischen Pol umfasst. Wenn der Stator oder der Rotor so konstruiert ist, dass er mechanisch ausgeprägte Pole aufweist, ist der Spalt mit der Länge $l_s$ dann messbar, wenn sich der erste und der zweite magnetische Pol so gegenüber stehen, dass sie in dem Betriebszeitpunkt von einem gemeinsamen magnetischen Nutzfluss durchflossen werden können.

Bei der erfindungsgemäßen elektrischen Maschine wird von der Lehre abgewichen, dass man den räumlichen Anteil k so groß wie möglich wählt (0,95 ... 0,98) und die Sättigungspolarisation durch Auswahl entsprechender Materialien so hoch wie möglich ausführt. Man versucht somit, die elektrische Maschine so kompakt wie möglich zu bauen, um eine Gewichtsreduzierung bei gleicher Leistungsfähigkeit, insbesondere bei gleicher Kraftausbeute, zu erreichen. Bei der erfindungsgemäßen elektrischen Maschine wurde jedoch erkannt, dass ein deutlich weniger kompakter Aufbau hinsichtlich des Abstandes der magnetisch aktiven Schichten nur zu einer geringen Verringerung der Leistungsfähigkeit führt, wohingegen eine wesentliche Reduzierung der Masse des magnetisch aktiven Teils der elektrischen Maschine erreicht werden kann. Die im Wesentlichen durch eine Wiederholung der Periode p in ihrer Reihenfolge angeordneten magnetisch aktiven Schichten und magnetisch inaktiven Schichten in Verbindung mit der Bedingung für den räumlichen Anteil k ermöglichen überraschenderweise, dass ein nahezu ebenso großer magnetischer Nutzfluss erreicht wird wie bei einer kompakten Bauweise der magnetisch aktiven Teile einer elektrischen Maschine. Wobei im Wesentlichen bedeutet, dass bei lokalen Abweichungen in der Reihenfolge der Anordnung der Schichten eine geringe Verringerungen der Leistungsfähigkeit auftritt. Abweichungen in der Reihenfolge der Schichten, die bis zu ±20% der Schichten betrifft sind lokale Abweichungen.

Durch eine Auswahl eines ersten Materials für die magnetisch aktiven Schichten und eines zweiten Materials für die magnetisch inaktiven Schichten, das eine geringere mittlere Massedichte als das erste Material aufweist, wird eine Reduzierung der Masse erreicht. Erfindungsgemäß wird die Reduzierung der Masse dadurch ermöglicht, dass die magnetisch inaktiven Schichten aus dem zweiten Material einen deutlichen Anteil am Volumen der magnetisch aktiven Teile der elektrischen Maschine haben. Da die magnetisch inaktiven Schichten oder magnetisch aktiven Schichten auch inhomogen aufgebaut sein können, werden die mittleren Massedichten der Volumina $V_a$ und $V_i$ betrachtet.

Erfindungsgemäß weisen die magnetisch aktiven Schichten Dicken $b_{Ai}$ auf, die im Wesentlichen alle die Bedingung

$$b_{Ai} \leq l_s/4...l_s/20$$

erfüllen. Bei dieser Bedingung wird davon ausgegangen, dass die Länge $l_s$, wenn diese an verschiedenen magnetisch aktiven Schichten parallel zu diesen gemessen wird, nur geringe Abweichungen aufweist, so dass für die Länge $l_s$ die gemittelte Länge $l_s$ der parallel zu den magnetisch aktiven Schichten gemessenen Werte der Länge $l_s$ für diese Bedingung verwendet werden kann. Bei elektrischen Maschinen mit bewegbaren magnetischen Polen wird generell vom Fachmann angestrebt die Länge des Spaltes zwischen bewegbaren magnetischen Polen mit möglichst konstanter Länge auszuführen, um eine optimale Betriebsweise zu erreichen.

Wenn die Dicken $b_{Ai}$ der magnetisch aktiven Schichten die genannte Bedingung erfüllen, so erreicht man eine Wesentliche Reduzierung der Masse der elektrischen Maschine gegenüber einer kompakten Bauweise der magnetisch aktiven Teile der elektrischen Maschine bei einer nur geringen Verringerung der Leistungsfähigkeit, insbesondere kann durch geeignete Wahl eines bestimmten Teilwertes der Länge $l_s$, z.B. einen Bruchteil von ¼ bis 1/20 der Länge $l_s$, in der Bedingung für die Dicken $b_{Ai}$ die Reduzierung der Masse bzw. die dabei auftretende Verringerung der Leistungsfähigkeit für einen Maschinentyp der elektrischen Maschine oder der Anwendung verbessert werden.

Die magnetisch aktiven Schichten können in den Dicken $b_{Ai}$ untereinander um beispielsweise bis ±20% abweichen, ohne dass dies zu einem wesentlichen Einfluss auf die Wirkung der Erfindung führt.

Dies gilt ebenso für die magnetisch inaktiven Schichten.

In einer vorteilhaften Ausgestaltung der Erfindung ist in dem Spalt an dem den Spalt begrenzenden Ende des zweiten magnetischen Pols ein Permanentmagnet angeordnet, der einen ersten und einen zweiten Permanentmagnetpol umfasst, wobei dessen erster Permanentmagnetpol dem begrenzenden Ende des zweiten magnetischen Pol zugewandt ist. Der zweite Permanentmagnetpol des Permanentmagneten ist damit in dem Betriebszeitpunkt dem den Spalt begrenzenden Ende des ersten magnetischen Pols zugewandt. Der Permanentmagnet ist vorteilhaft an dem zweiten magnetischen Pol befestigt. Dies ist als kraftschlüssige oder formschlüssige Verbindungen oder eine Kombination beider Verbindungsarten ausgeführt. Eine platzsparende Verbindung ist die Befestigung des Permanentmagnets an der Oberfläche des zweiten magnetischen Pols, die den Spalt begrenzt.

Die Ausgestaltung mit dem Permanentmagnet bietet zusätzlich neben den vorteilhaften Wirkungen des Einsatzes von Permanentmagneten in elektromechanischen Energiewandlern die Wirkung, dass der Spalt zwischen dem ersten und dem zweiten magnetischen Pol effektiv größer gewählt werden kann. Da sich der Permanentmagnet bezüglich seiner relativen Permeabilität nahezu wie das Medium Luft verhält, wird die Länge des Spalts $l_s$ so bemessen, als wäre der Permanentmagnet nicht vorhanden.

So ermöglicht die Verwendung von Permanentmagneten größere Dicken $b_{Ai}$ der magnetisch aktiven Schichten. Des Weiteren können auch die magnetischen inaktiven Schichten dicker ausgeführt werden. Dies hat zur Folge, dass bei der Fertigung der erfindungsgemäßen elektrischen Maschine eine höhere relative Genauigkeit erreicht wird, und die einzelnen Schichten für sich höhere Stabilität aufweisen und in der Fertigung einfacher zu handhaben sind.

In einer weiteren vorteilhaften Ausgestaltung der Erfindung sind die magnetisch inaktiven Schichten Abstandshalter. Die Abstandshalter sind vorteilhaft elektrisch isolierend ausgebildet. Die Abstandshalter können zur mechanischen Verstärkung elektrisch leitende Teile umfassen, da punktuell auftretende elektrisch leitende Verbindungen zwischen den magnetisch aktiven Schichten in einem gewissen Maße möglich sind, ohne die Eigenschaften der elektrischen Maschine zu verschlechtern.

Die Abstandshalter können so ausgeführt sein, dass sie den Raum zwischen den magnetisch aktiven Schichten nicht komplett ausfüllen, so dass sie Hohlräume, z.B. in Form von Kanälen, in den magnetisch inaktiven Schichten bilden. Somit kann ein Fluid, z.B. ein Gas oder eine Flüssigkeit, zum Kühlen der elektrischen Maschine zwischen den Abstandshaltern hindurchströmen. So hat die erfindungsgemäße elektrische Maschine bei nahezu gleicher Leistungsfähigkeit eine geringere Masse und bietet ideale Möglichkeiten zum Kühlen. Das Fluid kann vorteilhaft Wicklungen kühlen, die z.B. um den ersten magnetischen Pol oder um den zweiten magnetischen Pol angeordnet sind. Wenn der Stator magnetische Pole gemäß dem ersten magnetischen Pol mit Abstandshaltern umfasst, die den Raum zwischen den magnetisch aktiven Schichten nicht komplett ausfüllen, kann das Fluid durch die Hohlräume zu dem Rotor gelangen.

Wenn die Abstandshalter den Raum zwischen den magnetisch aktiven Schichten komplett ausfüllen, kann eine hohe Stabilität erreicht werden. Die Abstandshalter sind magnetisch inaktive Schichten, die bündig zu den am Spalt gelegenen Enden der magnetisch aktiven Schichten angeordnet sein können.

Alle angesprochenen Abstandshalter können als Zwischenplatte, Plakettierplatte, Lamelle oder Abstandslamelle ausgeführt sein. Dies heißt insbesondere, dass die Oberflächen der Abstandshalter entsprechend strukturiert sein können, um eine bessere Kühlwirkung oder eine bessere Stabilität der Abstandshalter zu erreichen. Eine hohe Stabilität bei geringer Masse wird insbesondere durch Abstandshalter aus einem glasfaserverstärkten Kunststoff (GFK) oder einem kohlenstofffaserverstärkte Kunststoff (CFK).

In einer weiteren vorteilhaften Ausgestaltung der Erfindung sind die magnetisch aktiven Schichten an den magnetisch inaktiven Schichten befestigt. Dadurch wird die Wirkung einer Kraft auf die magnetisch aktiven Schichten in die magnetisch inaktiven Schichten eingeleitet und von dort in die weitere Konstruktion des Rotors oder Stators eingeleitet. Die Kraft kann somit schon an dem den Spalt begrenzenden Enden des ersten magnetischen Pols in die magnetisch inaktive Schicht eingeleitet werden. Eine einzelne magnetisch aktive Schicht kann somit eine geringere Stabilität aufweisen, da die Kräfte schon an dem den Spalt begrenzenden Ende auf die magnetisch aktiven Schichten übertragen werden. Die Übertragung der Kraft kann formschlüssig z.B. durch entsprechend geformte Oberflächen bzw. strukturierte Oberflächen bei den magnetisch inaktiven Schichten oder den magnetisch aktiven Schichten erfolgen. Es können auch sowohl die magnetisch aktiven als auch die magnetisch inaktiven Schichten eine entsprechend strukturierte Oberfläche aufweisen, die miteinander verhaken. Eine Befestigung der magnetisch aktiven Schicht an die magnetisch inaktiven Schichten kann auch kraftschlüssig erfolgen. Die kraftschlüssige Befestigung kann auch in Verbindung mit der beschriebenen formschlüssigen Befestigung verwendet werden. Die magnetisch aktiven Schichten können auch auf die magnetisch inaktiven Schichten aufgeklebt sein. Insbesondere vorteilhaft ist, wenn sich die magnetisch aktiven Schichten und die magnetisch inaktiven Schichten mit einer großen Fläche gegenüberliegen. Dann können nämlich günstige Befestigungsmittel verwendet werden, die lokal eine geringe Befestigung, aber über eine große Fläche eine ausreichende Befestigung sicherstellen.

Wenn die magnetisch aktiven Schichten an den magnetisch inaktiven Schichten befestigt sind, können die magnetisch aktiven Schichten sehr dünn ausgeführt werden. Dies ermöglicht eine verbesserte Unterdrückung von Wirbelströmen. Dünne magnetisch aktive Schichten sind auch deshalb möglich, da diese durch ihre Befestigung an den magnetisch inaktiven Schichten die Form der magnetisch inaktiven Schichten annehmen.

Vorzugsweise können auch hier für die magnetisch inaktiven Schichten glasfaserverstärkte Kunststoffe (GFK) oder kohlenstofffaserverstärkte Kunststoffe (CFK) verwendet werden. Dies ermöglicht eine vorteilhafte Verbindung mit einer Tragstruktur, z.B. einem Gehäuse oder einem Fahrzeuggestell, das in einer Leichtbauweise auch aus diesen Stoffen hergestellt ist.

In einer weiteren vorteilhaften Ausgestaltung der Erfindung sind die magnetisch inaktiven Schichten durch eine kammartige Struktur mit einer Tragstruktur und/oder wenigstens einem weiteren magnetischen Pol verbunden. Die Tragstruktur ist insbesondere ein Bestandteil des Stators oder Rotors. Die kammartige Verbindung mit der Tragstruktur ermöglicht eine großflächige Verbindung zwischen der Tragstruktur und den magnetisch inaktiven Schichten, die eine sehr gute Übertragung der Kräfte ermöglichen, die auf die magnetisch inaktiven Schichten wirken, ohne kostspielige Verbindungsmittel zu verwenden.

Die kammartige Verbindung des ersten magnetischen Pols mit einem weiteren magnetischen Pol ermöglicht es, einzelne magnetische Pole herzustellen und diese je nach Erfordernis der elektrischen Maschine zu einem Rotor oder Stator durch die kammartige Verbindung miteinander zu verbinden.

Bei einer rotierenden elektrischen Maschine bilden die magnetischen Pole einen Kreis oder sie bilden diesen polygonartig nach. Neben der kammartigen Verbindung der einzelnen magnetischen Pole untereinander kann zusätzlich ein durchgehender Ring die magnetischen Pole in ihrer Position halten.

In einer weiteren vorteilhaften Ausgestaltung der Erfindung umfasst die elektrische Maschine einen Stator, der den ersten magnetischen Pol aufweist und einen Rotor, der den zweiten magnetischen Pol aufweist. Durch die erfindungsgemäße Ausführung mindestens einer der magnetischen Pole des Stators in der Form des ersten magnetischen Pols wird die Masse des Stators verringert. Bei elektrischen Maschinen, deren Stator die größte Masse an magnetisch aktiven Teilen aufweist, ist dies besonders vorteilhaft. Führt man alle magnetischen Pole des Stators und alle restlichen Teile des magnetisch aktiven Teils, z.B. das Joch des Stators, bezüglich der Schichten, wie den ersten magnetischen Pol aus, so erhält man einen sehr massearmen Stator.

Vorteilhaft ist auch ein segmentartiger Aufbau des Stators, bei dem die magnetischen Pole des Stators kammartig miteinander verbunden sind. Der Stator ist hierbei aus Einzelsegmenten aufgebaut. Ein Vorteil eines segmentierten Stators besteht darin, dass beispielsweise bei einer rotierenden elektrische Maschine der Stator nicht kontinuierlich entlang des Maschinenumfangs ausgebildet sein muss. Der Stator kann Lücken aufweisen, was insbesondere in mobilen Anwendungen zur Bauraumoptimierung nutzbar ist.

In einer weiteren vorteilhaften Ausgestaltung der Erfindung umfasst die elektrische Maschine einen Rotor, der den ersten magnetischen Pol aufweist, und einen Stator, der den zweiten magnetischen Pol aufweist. In dieser Ausführungsform hat der Rotor ein geringes Trägheitsmoment, da mindestens ein magnetischer Pol des Rotors wie der erste magnetische Pol ausgeführt ist. Das niedrigste Trägheitsmoment im Sinne der Erfindung wird dabei dann erreicht, wenn alle magnetischen Pole des Rotors wie der erste magnetische Pol ausgeführt sind und auch alle magnetisch aktiven Teile des Rotors, z.B. das Joch des Rotors, wie der erste magnetische Pol in Bezug auf die Schichten ausgebildet sind. Die Ausführungsform mit dem Rotor mit geringem Trägheitsmoment ist besonders interessant für Anwendungen, in denen eine hohe Beschleunigung benötigt wird.

In einer weiteren vorteilhaften Ausgestaltung der Erfindung ist die elektrische Maschine eine Linearmaschine. Bei einer Linearmaschine wird der Stator in einer Ebene relativ zum Rotor bewegt. Es ist bei der Linearmaschine auch möglich, dass der Rotor relativ zum Stator in einer Ebene bewegt wird. Ein Unterscheidungsmerkmal zwischen Stator und Rotor der Linearmaschine ist häufig deren unterschiedliche Masse. Um den Rotor einfach zu gestalten, wird in vielen Anwendungen der Stator relativ zum Rotor bewegt. Hier ist es vorteilhaft, wenn der Stator den ersten magnetischen Pol umfasst, um die bewegte Masse bei nahezu unveränderter Leistungsfähigkeit zu reduzieren. Dadurch wird eine höhere Beschleunigung erreicht.

In einer weiteren vorteilhaften Ausgestaltung der Erfindung ist die elektrische Maschine eine rotierende elektrische Maschine. In einer rotierenden elektrischen Maschine rotiert der Rotor relativ zum Stator. Der Rotor besitzt eine Drehachse, um die er sich im Betrieb der rotierenden elektrischen Maschine dreht. Der Rotor ist bezüglich der Drehachse im Stator gelagert. Zwischen den magnetischen Polen des Rotors und den magnetischen Polen des Stators befindet sich der Spalt $l_s$. Die Drehachse des Rotors ist insbesondere als Welle ausgebildet, so dass die elektrische Maschine Bewegungsenergie abgeben oder durch Drehen des Rotors durch eine externe Kraft elektrische Energie erzeugen kann.

Der Stator und der Rotor einer rotierenden elektrischen Maschine können auch durch Segmente ausgebildet sein, die für einen Linearmotor geeignet sind. Die Segmente bilden dann teilweise oder vollständig eine gebogene Form des Stator oder Rotors polygonartig nach.

Die beschriebenen vorteilhaften Ausgestaltungen und nachfolgend noch angeführte vorteilhafte Ausgestaltungen sind beliebig miteinander kombinierbar.

So sind in einer vorteilhaften Ausgestaltung der Erfindung einige oder alle magnetischen Pole des Stators und des Rotors wie den erfindungsgemäßen ersten magnetischen Pol als eine Schichtung von magnetisch aktiven und inaktiven Schichten gemäß den angegebenen Bedingungen auszuführen. So erhält man eine massenarme elektrische Maschine, die nahezu die gleiche Leistungsfähigkeit wie eine elektrische Maschine mit der kompakten Bauweise der magnetisch aktiven Teile hat.

Die Erfindung kann unabhängig von der Konstruktion und dem zugrundeliegenden Wirkprinzip einer rotierenden elektrischen Maschine oder einer Linearmaschine ausgeführt werden, wenn die elektrische Maschine die Merkmale einer Ausgestaltung gemäß den Ansprüchen aufweist. Beispiele für rotierende elektrische Maschinen und Linearmaschinen sind Asynchronmaschinen, Synchronmaschinen und Kommutatormaschinen. Des Weiteren ist bei rotierenden elektrischen Maschinen z.B. als Bauform eine Innenläufermaschine oder Außenläufermaschine möglich. Bei Linearmaschinen sind auch verschiedene Bauformen möglich. So kann z.B. ein Stator mit mehr als einem Rotor zusammenwirken. Ebenso kann die Erfindung bei Wechselstrommaschinen oder Gleichstrommaschinen ausgeführt werden.

Des Weiteren kann die Erfindung, insbesondere ihre Ausgestaltungen, vorteilhaft mit aus dem Stand bekannten Möglichkeiten zur Massenreduzierung einer elektrischen Maschine kombiniert werden. Diese Möglichkeiten sind z.B. ein optimierter Blechschnitt oder magnetisch aktive Materialien mit einer hohen Sättigungspolarisation.

Die Aufgabe wird auch durch ein magnetisches Polteil zur Verwendung als einen ersten magnetischen Pol für eine elektrische Maschine gelöst.

Ein erfindungsgemäßes magnetisches Polteil umfasst einen ersten magnetischen Pol zur Verwendung als einen ersten magnetischen Pol für eine elektrische Maschine, der eine Anordnung von Schichten aufweist, die magnetisch aktive Schichten mit einem Gesamtvolumen $V_a$ umfasst, wobei die Anordnung magnetisch inaktive Schichten mit einem Gesamtvolumen $V_i$ umfasst, die eine geringere geringere Massedichte als die magnetisch aktiven Schichten aufweisen, und eine Reihenfolge in der Anordnung der magnetisch inaktiven Schichten und der magnetisch aktiven Schichten im Wesentlichen durch eine Wiederholung einer Periode p vorgegeben ist, die eine festgelegte Folge von magnetisch aktiven Schichten und magnetisch inaktiven Schichten aufweist, wobei ein räumlicher Anteil k, der durch die Gleichung

$$k \ = \ V_a \ / \ ( \ V_a + V_i \ ) ;$$

definiert ist, die Bedingung

$$0,5 \ \leq \ k \ \leq \ 0,8;$$

erfüllt, und die Dicken $b_{Ai}$ die Bedingung $b_{Ai} \leq l_s/4 ... l_s/20$ erfüllen.

Die Wirkungen und Vorteile des magnetischen Polteils sind im Zusammenhang mit einer erfindungsmäßen elektrische Maschine beschrieben, da das magnetische Polteil zur Verwendung für den ersten magnetischen Pol für eine elektrische Maschine geeignet ist.

Die Aufgabe wird auch durch ein Fahrzeug gelöst, das eine erfindungsgemäße elektrische Maschine umfasst.

Ein erfindungsgemäßes Fahrzeug, insbesondere ein Landfahrzeug, ein Wasserfahrzeug oder ein Luftfahrzeug, umfasst eine erfindungsgemäße elektrische Maschine, insbesondere in den verschiedenen Kombinationen der beschriebenen Ausgestaltungen. Damit das Fahrzeug einen geringen Energieverbrauch für eine gefahrene Strecke aufweist, wird versucht, die Masse des Fahrzeugs möglichst gering zu halten. Die Antriebe der Fahrzeuge sind in der Regel so ausgelegt, dass sie überwiegend bei ihrer Nennbelastung betrieben werden. Der Einsatz einer erfindungsgemäßen elektrischen Maschine ermöglicht eine Massereduzierung bei dem Fahrzeug bei gleicher Antriebsleistung.

Die erfindungsgemäße elektrische Maschine kann besonders vorteilhaft bei Fahrzeugen eingesetzt werden, bei denen die elektrische Maschine mit einer maximalen Belastung die ca. 20% über der Nennbelastung liegt, eingesetzt werden. Bei einer Belastung, die die Nennbelastung um mehr als 20% überschreitet, kann die erfindungsgemäße elektrische Maschine auch noch vorteilhaft in Fahrzeugen eingesetzt werden. Jedoch sollte die Belastung der elektrischen Maschine nicht die doppelte Nennbelastung überschreiten.

Bei Fahrzeugen wie z.B. Kraftfahrzeugen wird der Hauptantrieb sehr häufig mit wechselnden Belastungen beaufschlagt. So wird z.B. bei hohem Verkehrsaufkommen oder in der Stadt durch die Ampelschaltungen das Fahrzeug häufig beschleunigt und wieder abgebremst. Die am häufigsten verwendeten Kraftfahrzeuge besitzen immer noch Verbrennungsmotoren. Die Verbrennungsmotoren haben gegenüber elektrischen Maschinen eine geringere Beschleunigungskraft beim Anfahren des Fahrzeugs. Die Verkehrsteilnehmer sind an das Fahrverhalten von Fahrzeugen mit Verbrennungsmotoren gewohnt. Bei dem erfindungsgemäßen Fahrzeug wurde erkannt, dass eine geringere maximale Belastung bei der elektrischen Maschine kein Akzeptanzproblem bei den Verkehrsteilnehmern verursacht. Dementsprechend lässt sich besonders vorteilhaft die erfindungsgemäße elektrische Maschine bei Kraftfahrzeugen einsetzen.

Bei schienengebundenen Fahrzeugen, Wasser- oder Luftfahrzeugen wird der Antrieb des Fahrzeugs überwiegend mit einer konstanten Belastung beaufschlagt. Deshalb kann hier bei einem erfindungsgemäßen Fahrzeug durch Einsatz einer erfindungsgemäßen elektrischen Maschine eine hohe Reduzierung an Masse erfolgen.

In einer weiteren vorteilhaften Ausgestaltung der Erfindung umfasst ein Fahrzeug, insbesondere ein Landfahrzeug, ein Wasserfahrzeug oder ein Luftfahrzeug, eine erfindungsgemäße elektrische Maschine als Teil eines Hybridantriebs. Hier ist eine erfindungsgemäße elektrische Maschine als Hauptantrieb eingesetzt. Wenn das Fahrverhalten eine Belastung der elektrischen Maschine mit mehr als 20% Nennbelastung oder die doppelte Nennbelastung erfordern, kann die Mehrbelastung durch einen weiteren Antrieb übernommen werden.

In einer weiteren vorteilhaften Ausgestaltung der Erfindung umfasst ein Fahrzeug, insbesondere ein Landfahrzeug, ein Wasserfahrzeug oder ein Luftfahrzeug, einen Direktantrieb, der eine erfindungsgemäße elektrische Maschine umfasst. Die elektrische Maschine umfasst eine Antriebswelle, die mit dem Rotor verbunden ist, und direkt mit einer Abtriebswelle des Fahrzeugs zum Bewegen des Fahrzeugs gekoppelt ist, das heißt insbesondere, dass die sich die Abtriebswelle und die Antriebswelle mit gleicher Drehzahl drehen. Insbesondere ist der Rotor auf der Antriebswelle befestigt. Durch die erfindungsgemäße Vermeidung eines Getriebes in Verbindung mit der elektrischen Maschine der Erfindung wird so die Masse des Fahrzeugs verringert und somit der Energieverbrauch des Fahrzeugs gesenkt.

In einer weiteren vorteilhaften Ausgestaltung der Erfindung umfasst ein Fahrzeug, insbesondere ein Landfahrzeug, ein Wasserfahrzeug oder ein Luftfahrzeug, eine erfindungsgemäße elektrische Maschine, insbesondere in den verschiedenen Kombinationen der beschriebenen Ausgestaltungen als Hilfsantrieb, z.B. für Scheibenheber oder Kühleinrichtungen. Aufgrund der vielen kleinen Hilfsantriebe, die in einem Fahrzeug vorhanden sind, ist in der Summe eine große Gewichtseinsparung bei dem erfindungsgemäßen Fahrzeug möglich.

Die Aufgabe wird auch durch eine Windkraftanlage gelöst, die eine erfindungsgemäße elektrische Maschine umfasst.

Eine erfindungsgemäße Windkraftanlage umfasst eine erfindungsgemäße elektrische Maschine, insbesondere in den verschiedenen Kombinationen der beschriebenen Ausgestaltungen. Die erfindungsgemäße Windkraftanlage umfasst weiterhin einen Flügel, der mit dem Rotor der elektrischen Maschine mechanisch gekoppelt ist. Bei einer Windkraftanlage muss der Mast mit seiner Tragstruktur die Masse am oberen Ende des Mastes bei allen auftretenden Windkräften und Biegebelastungen sicher tragen, ohne dass Schäden am Mast auftreten. Demzufolge ist man bestrebt, die Last am Ende des Mastes gering zu halten. Andererseits möchte man aber einen großen Generator am Mastende anbringen, um möglichst viel elektrische Energie aus der Windkraftanlage zu gewinnen. Es ist nämlich kostengünstiger, eine große Windkraftanlage mit hoher Generatorleistung zu bauen, als viele kleinere Windkraftanlagen mit geringer Generatorleistung. Bei der erfindungsgemäßen Windkraftanlage kann bei gleicher Masse am Ende des Mastes eine höhere Generatorleistung bereitgestellt werden. Die Verwendung von magnetischen Polen, die in ihrem Aufbau dem des ersten magnetischen Pols entsprechen, im Rotor hat den besonderen Vorteil, dass durch den massenarmen Rotor die Windkraft eine geringere Masse bewegen muss, um die Flügel in Bewegung zu setzen.

Ferner wird die Aufgabe durch ein Verfahren zur Herstellung einer elektrischen Maschine gelöst.

Das erfindungsgemäße Verfahren zur Herstellung einer elektrische Maschine umfasst, dass

- magnetisch inaktive Schichten die eine geringere mittlere Massedichte als die magnetisch aktiven Schichten aufweisen ausgewählt werden,
- der räumliche Anteil k gemäß der Bedingung

$$0,5 \leq k \leq 0,8$$

festgelegt wird,

- eine Folge einer Periode p von magnetisch aktiven Schichten und magnetisch inaktiven Schichten festgelegt wird, und
- die Anordnung, die die magnetisch aktiven Schichten und die magnetisch inaktive Schichten umfasst, im Wesentlichen durch eine Wiederholung der Periode p festgelegt wird.

Das Verfahren ermöglicht erfindungsgemäß die Herstellung von elektrischen Maschinen, die eine wesentliche Reduzierung der Masse der magnetisch aktiven Teile aufweisen bei geringer Verringerung der Leistungsfähigkeit im Vergleich zu elektrischen Maschinen mit kompakter Bauweise der magnetisch aktiven Teile.

Durch eine Auswahl eines ersten Materials für die magnetisch aktiven Schichten und eines zweiten Materials für die magnetisch inaktiven Schichten, das eine geringere mittlere Massedichte als das erste Material aufweist, wird eine Reduzierung der Masse erreicht. Erfindungsgemäß wird die Reduzierung der Masse dadurch ermöglicht, dass die magnetisch inaktiven Schichten aus dem zweiten Material einen deutlichen Anteil am Volumen der magnetisch aktiven Teile der elektrischen Maschine haben. Da die magnetisch inaktiven Schichten oder magnetisch aktiven Schichten auch inhomogen aufgebaut sein können, werden die mittleren Massedichten der Volumina $V_a$ und $V_i$ betrachtet.

Im Rahmen dieses Verfahrens zur Herstellung einer elektrische Maschine werden die Dicken $b_{Ai}$ der magnetisch aktiven Schichten (3) festgelegt, so dass die Bedingung

$$b_{Ai} \leq l_s/4 \ldots l_s/20$$

erfüllt wird.

Wenn die Dicken $b_{Ai}$ der magnetisch aktiven Schichten so festgelegt werden, dass sie die genannte Bedingung erfüllen, so erreicht man eine Wesentliche Reduzierung der Masse der elektrischen Maschine gegenüber einer kompakten Bauweise der magnetisch aktiven Teile der elektrischen Maschine bei einer nur geringen Verringerung der Leistungsfähigkeit, insbesondere kann durch geeignete Wahl eines bestimmten Teilwertes der Länge $l_s$, z.B. einen Bruchteil von ¼ bis 1/20 der Länge $l_s$, in der Bedingung für die Dicken $b_{Ai}$ die Reduzierung der Masse bzw. die dabei auftretende Verringerung der Leistungsfähigkeit für einen Maschinentyp der elektrischen Maschine oder der Anwendung verbessert werden.

Im Folgenden wird die Erfindung anhand der in den Figuren dargestellten Ausführungsbeispiele näher beschrieben und erläutert:

FIG 1    eine Ausführung einer elektrischen Maschine, die einen ersten magnetischen Pol umfasst,

FIG 2    ein Querschnitt entlang der Linie II-II der FIG 3,

FIG 3    eine Ausführung der elektrischen Maschine als Linearmaschine,

FIG 4    ein Vergleich einer erfindungsgemäßen Linearmaschine mit einer Linearmaschine aus dem Stand der Technik bezüglich der gemessenen Motorkraft bei einem gemessenen Strom,

FIG 5    eine Ausführung der elektrischen Maschine mit Abstandshalter, die den Raum zwischen magnetisch aktiven Schichten teilweise ausfüllen,

FIG 6    eine Ausführung eines ersten magnetischen Pols und eines weiteren magnetischen Pols

FIG 7    eine Ausführung einer elektrischen Maschine als rotierende elektrische Maschine,

FIG 8    einen Querschnitt entlang der Linie VII-VII der rotierenden elektrischen Maschine aus FIG 7,

FIG 9    eine Ausführung eines magnetischen Polteils,

FIG 10    eine Ausführung einer Windkraftanlage,

FIG 11    einen Vergleich insbesondere der Nennkräfte bei einem Nennstrom für eine erfindungsgemäße Ausführung der elektrischen Maschine im Vergleich zu elektrischen Maschinen aus dem Stand der Technik.

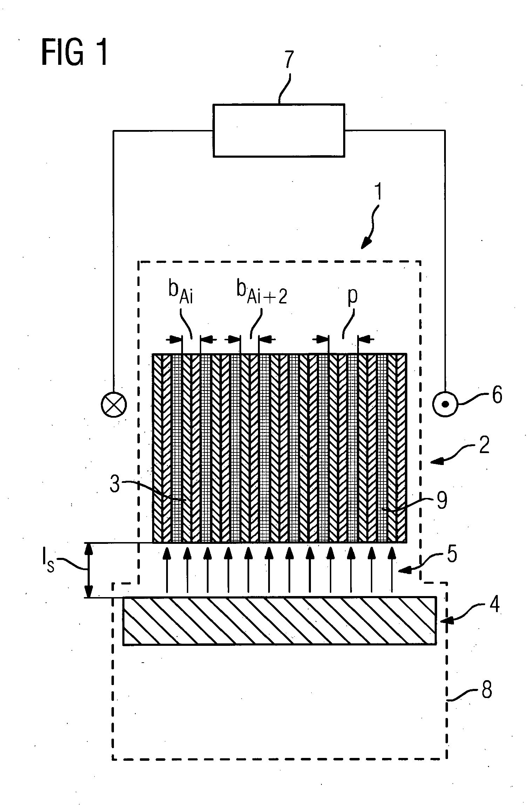

FIG 1 zeigt eine Ausführung einer elektrischen Maschine 1, die einen ersten magnetischen Pol 2 umfasst. Der erste Magnetische Pol 2 umfasst eine Anordnung von Schichten. Die Schichten umfassen magnetisch aktive Schichten 3 und magnetisch inaktive Schichten 9, wobei die magnetisch inaktiven Schichten 9 eine geringere mittlere Massendichte aufweisen als die magnetisch aktiven Schichten 3. Die Anordnung der Schichten weist eine Periode p auf. Die Periode p weist eine festgelegte Folge von magnetisch aktiven Schichten 3 und magnetisch inaktiven Schichten 9 auf. In FIG 1 beginnt die Periode p mit zwei aufeinander folgenden magnetisch aktiven Schichten 3 und endet mit einer magnetisch inaktiven Schicht 9. Die Anordnung der Schichten ist im Wesentlichen eine Wiederholung der Periode p. Der räumliche Anteil k, den man aus dem Gesamtvolumen $V_A$ der magnetisch aktiven Schichten 3 und dem Gesamtvolumen $V_i$ der magnetisch inaktiven Schichten 9 ermitteln kann, soll in FIG 1 zwei Drittel betragen. Der magnetische Pol 2 liegt einem zweiten magnetischen Pol 4 gegenüber, so dass sich ein Spalt 5 ausbildet. Der Spalt 5 hat eine Länge $l_s$, die in einer Richtung parallel zu einer der Schichten von einem den Spalt 5 begrenzenden Ende des ersten magnetischen Pols 2 zu einem den Spalt 5 begrenzenden Ende des zweiten magnetischen Pols 4 gemessen wird. Die FIG 1 zeigt, dass die die magnetisch inaktiven Schichten 9 bündig zu den am Spalt 5 gelegenen Enden der magnetisch aktiven Schichten 3 angeordnet sind und die Länge $l_s$ für die gesamte Anordnung der Schichten definiert ist. Die elektrische Maschine gemäß FIG 1 umfasst weiterhin einen elektrischen Leiter 6 als Koppelelement zwischen einem elektrischen Stromkreis 7 und einem magnetischen Kreis 8. Der elektrische Leiter 6 umfasst vorzugsweise Windungen, die den ersten magnetischen Pol 2 umgeben. Die FIG 1 zeigt die elektrische Maschine 1 zu einem Betriebszeitpunkt, zu dem der magnetische Kreis 8 den ersten magnetischen Pol 2, den Spalt 5 mit der Länge $l_s$ und den zweiten magnetischen Pol 4 umfasst, die von einem gemeinsamen magnetischen Nutzfluss zur elektromechanischen Energieumwandlung durchflutet werden. Ist die elektrische Maschine ein Motor, so wird der magnetische Nutzfluss beim Betrieb des Motors durch einen Strom, der im elektrischen Stromkreis 7 fließt, erzeugt. Der magnetische Nutzfluss bewirkt, dass sich der erste magnetische Pol und der zweite magnetische Pol relativ zu einander bewegen. So erfolgt eine elektromechanische Energieumwandlung von elektrischer Energie, die im elektrischen Stromkreis 7 vorhanden ist, in mechanische Energie, die durch die relative Bewegung des ersten magnetischen Pols 2 und des zweiten magnetischen Pols 4 vorhanden ist.

Wird die elektrische Maschine 1 als Generator eingesetzt, wird der gemeinsame magnetische Nutzfluss durch eine relative Bewegung des ersten magnetischen Pöls 2 zum zweiten magnetischen Pol 4 hervorgerufen. Der magnetische Nutzfluss bewirkt dann ein Fließen eines elektrischen Stroms in dem elektrischen Stromkreis 7. Somit wird in diesem Fall Bewegungsenergie, die den ersten magnetischen Pol 2 relativ zum zweiten magnetischen Pol 4 bewegt, in elektrische Energie im elektrischen Stromkreis 7 umgewandelt.

In der Ausführung gemäß FIG 1 ist nicht maßstabsgetreu wiedergegeben, dass die Dicken $b_{Ai}$ der magnetisch aktiven Schichten 3 die Bedingung $b_{Ai} \leq l_s/4...l_s/20$ erfüllen. Die Erfüllung der Bedingung bedeutet z.B., dass sowohl $b_{Ai}$ als auch $b_{Ai}+2$ die Bedingung erfüllen.

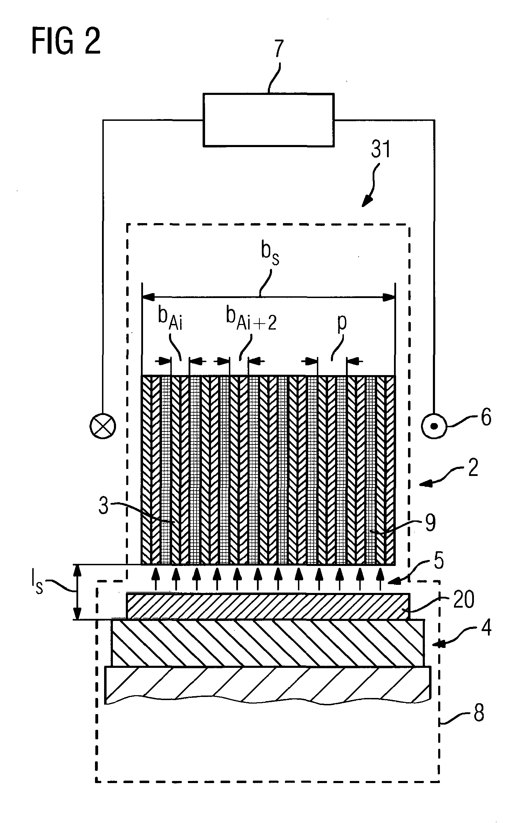

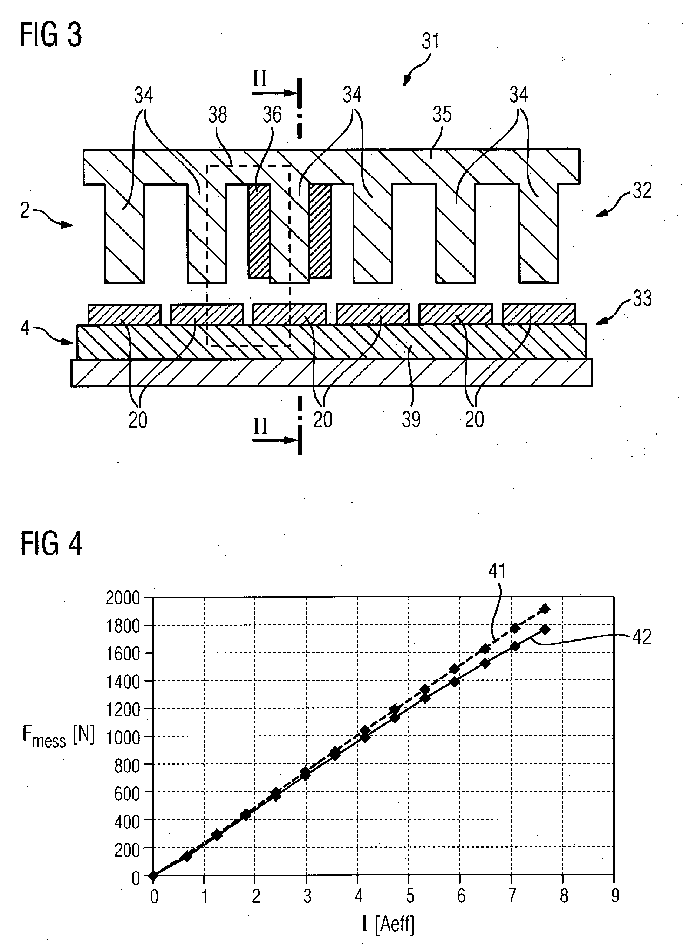

Eine Ausführung der elektrischen Maschine 1, 51, 101 ist eine Linearmaschine 31 gemäß FIG 2 und 3. Die FIG 3 zeigt, dass die Linearmaschine 31 einen Stator 32 und einen Rotor 33 umfasst. Der Stator 32 umfasst mehrere magnetische Pole, deren Aufbau dem des ersten magnetischen Pols 2 entspricht. Die magnetisch aktiven Schichten 3 werden gemäß FIG 3 durch Bleche gebildet, die einstückig ein Statorjoch 35 und mehrere Zähne 34 bilden. Auf den Zähnen 34, die magnetische Pole in der Art des ersten magnetischen Pols 2 bilden, sind Zahnspulen 36 befestigt. In FIG 3 ist beispielhaft eine Zahnspule 36 eingezeichnet. Um eine gewisse Verteilung des magnetischen Flusses zu erreichen, können einige der Zähne 34 keine Zahnspulen 36 aufweisen. Der elektrische Leiter 6 in der Ausführung gemäß FIG 2 und 3 entspricht den Windungen der Zahnspule 36.

Der Rotor 33 der Linearmaschine 31 gemäß FIG 2 und 3 umfasst mehrere magnetische Pole in der Art des zweiten magnetischen Pols 4, die miteinander durch ein Rotorjoch 33 verbunden sind und Permanentmagnete 20 umfassen. Die Permanentmagnete 20 grenzen mit einem ihrer Permanentmagnetpole (Nord oder Süd) an das obere Ende des Rotorjoch 39 an. Der Spalt $l_s$ wird von diesem oberen Ende des Rotorjochs 39 bis zum freien Ende der Zähne 34 gemessen. Die Länge $l_s$, die bei verschiedenen Zähnen 34 gemessen wird, ist im Wesentlichen gleich. Dies bedeutet, dass Abweichungen der unterschiedlich gemessenen $l_s$ keine wesentlichen Auswirkungen auf die Leistungseigenschaften der Linearmaschine 31 haben.

Die FIG 4 zeigt die gemessene Motorkraft in Abhängigkeit vom Versorgungsstrom für eine erfindungsgemäße Ausführung des Linearmaschine 31 als durchgezogene Linie 42 mit Messpunkten und für einen Linearmaschine, wie er aus dem Stand der Technik bekannt ist, als Strichlinie 41 mit Messpunkten.

Die verwendete erfindungsgemäße Ausführung der Linearmaschine 31 ist als Labormuster aus Standardkomponenten eines Dreiphasen-Linearmotors in vereinfachter Weise aufgebaut. So sind die magnetisch inaktiven Schichten 9 nur metallische Abstandshalter. Die metallischen Abstandshalter sind durch Verbiegen der Bleche des Stators 32 an einigen Enden erzeugt worden, so dass die magnetisch inaktiven Schichten 9 als Hohlräume ausgebildet sind. Bei der Linearmaschine 31 sind - wie in FIG 2 dargestellt - für eine Periode p zwei Bleche der Dicke 0,5 mm aneinandergereiht und daran anschließend der Hohlraum der Dicke 0,5 mm gebildet. Die Länge $l_s$ beträgt 6 mm, wobei gemäß einer Ausgestaltung der Erfindung Permanentmagnete 20 innerhalb des Spalts angeordnet sind. Die Permanentmagnete 20 hatten eine Höhe von 4 mm.

Die Linearmaschine, wie sie aus dem Stand der Technik bekannt ist, ist in der gleichen Weise wie die Linearmaschine 31 aufgebaut, wobei die Bleche nicht verbogen sind und somit anstelle der magnetisch inaktiven Schicht 9 ein Blech eingesetzt ist. Der Stator der Linearmaschine gemäß dem Stand der Technik weist somit eine im Stand der Technik angestrebte und übliche dichte Packung auf.

Die Zahnspulen 36 der beiden Linearmaschinen wurden wie bei einer Dreiphasen-Linearmaschine aus dem Stand der Technik verschaltet.

Zur Messung gemäß FIG 4 wurden die beiden Motoren jeweils mit einem Versorgungsstrom I gemessen in $A_{eff}$ versorgt und mit einer Kraftmessdose die Motorkraft $F_{mess}$ in Newton gemessen.

Mit zunehmendem Versorgungsstrom weist die erfindungsgemäße Ausführung des Linearmaschine 31 eine geringere Motorkraft auf als die der der vergleichbarer Linearmaschinen aus dem Stand der Technik. Dabei ist aber der Verlust an Motorkraft gegenüber einer Linearmaschine aus dem Stand der Technik gering.

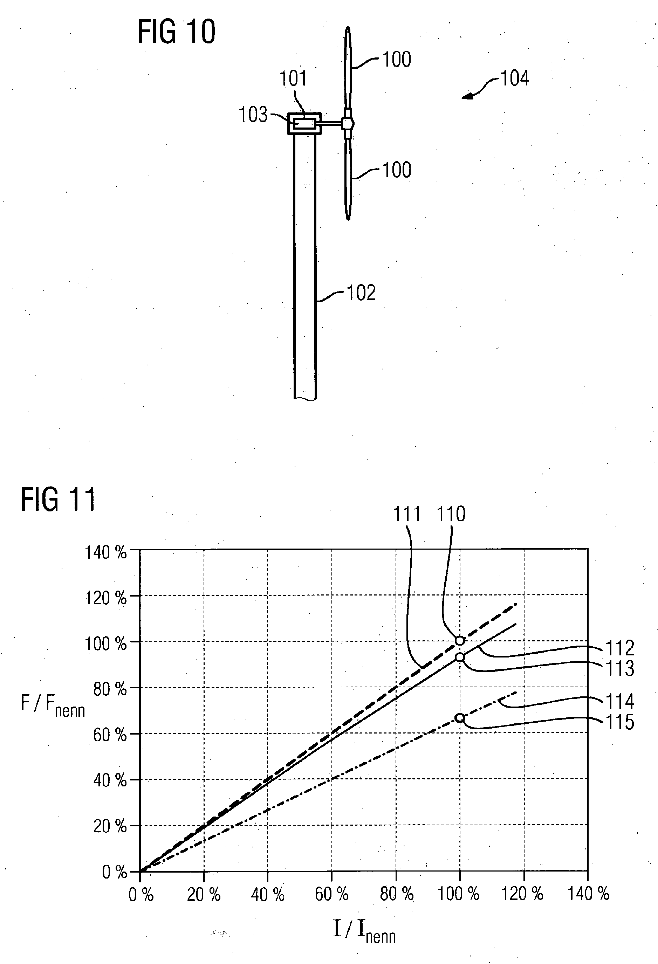

Die FIG 11 verdeutlicht, dass der Verlust an Motorkraft gering ist. Die FIG 11 zeigt die Motorkraft bezogen auf die Nennmotorkraft der Linearmaschine aus dem Stand der Technik. Die Nenn-Motorkraft entspricht der Nennbelastung der Linearmaschine und lässt sich im Allgemeinen durch Multiplikation mit einer Nenngeschwindigkeit in eine Nennleistung umrechnen. Der Nennstrom ist der Versorgungsstrom, der fließt, wenn die Linearmaschine ihre Nenn-Motorkraft ausbildet.

Die Strichlinie 111 und der Nennpunkt 110 auf der Strichlinie gehören zu der Linearmaschine aus dem Stand der Technik. Die strichpunktierte Linie 114 mit dem Nennpunkt 115 gehört zu einer Linearmaschine, die baugleich zu der Linearmaschine aus dem Stand der Technik ist, wobei eine aktive Spurbreite $b_s$ (siehe Fig. 2) auf ca. 67% gegenüber der der Linearmaschine, die durch die Strichlinie 111 wiedergegeben ist, reduziert ist. Diese Linearmaschine weist eine um 67% geringere Masse auf. Damit kann man das Erfordernis einer geringeren Masse erfüllen, jedoch verringert sich die Nennkraft auf 67% der ursprünglichen Linearmaschine aus dem Stand der Technik.

Bei der erfindungsgemäßen Ausführung der Linearmaschine 31 als Labormuster reduziert sich die Nenn-Motorkraft um weniger als 10% gegenüber der Linearmaschine aus dem Stand der Technik. Bei der erfindungsgemäßen Ausführung der Linearmaschine 31 als Labormuster wird also eine Reduzierung der Masse um 33% erreicht, ohne dass die Motornennkraft wesentlich verringert wird.

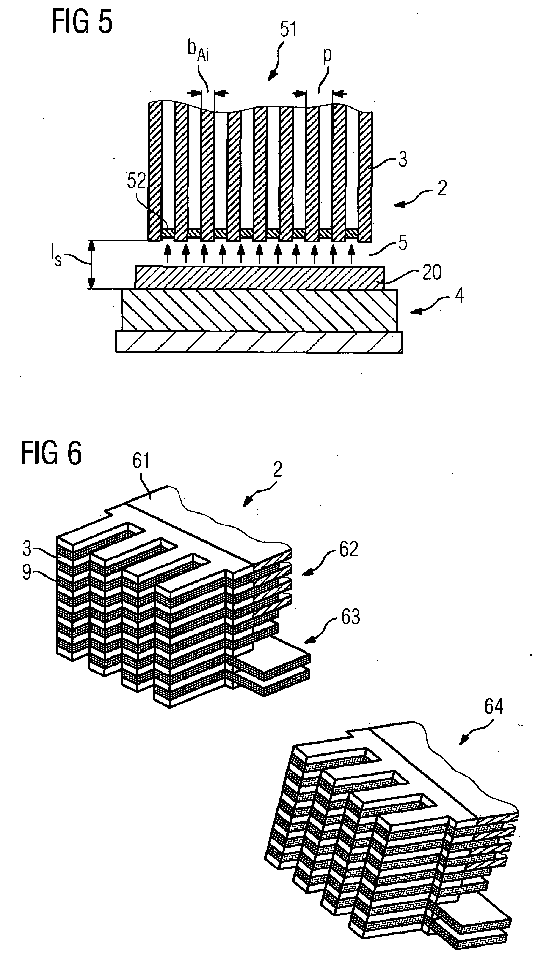

FIG 5 zeigt eine alternative Ausführung der magnetisch inaktiven Schichten 9 einer elektrischen Maschine 51, bei der die magnetisch inaktiven Schichten 9 Abstandshalter 52 sind. Vorteilhaft ist dabei das Anordnen der Abstandshalter 52 nahe an einem den Spalt 5 begrenzenden Ende des ersten magnetischen Pols 2, um die Wahrscheinlichkeit des Verbiegens der Enden des ersten magnetischen Pols 2 zu verringern. Um eine definierte Lage der Abstandshalter 52 zu erreichen, können diese bündig zu dem am Spalt 5 gelegenen Enden der magnetisch aktiven Schichten 3 angeordnet sein. Damit der erste magnetische Pol 2 ein stabiles Gebilde ist, können die Abstandshalter 52 an den magnetisch aktiven Schichten 3 befestigt sein.

Um die magnetisch aktiven Schichten 3 noch besser gegen ein Verbiegen zu sichern, können weitere Abstandshalter 52 in allen Richtungen der Schicht bevorzugt gleichmäßig beabstandet angebracht sein.

Die Ausdehnung der Abstandshalter 52 senkrecht zur Zeichenebene der FIG 5, das heißt in einer Richtung bzw. einer der Richtungen, die parallel zu den magnetisch aktiven Schichten 3 verläuft und nicht in Richtung des Spaltes weist, kann kürzer ausgeführt werden als die magnetisch aktiven Schichten 3. Dies ermöglicht, dass ein Fluid, wie z.B. Luft oder Wasser, zur Kühlung in einer Richtung parallel zu einer der Schichten zum zweiten magnetischen Pol 4 gelangen kann. So kann nicht nur der erste magnetische Pol 2, sondern auch der zweite magnetische Pol 4 gekühlt werden. Es können die Abstandshalter 52 punktuell oder mit einer sehr kleinen Berührungsfläche mit den magnetisch aktiven Schichten 3 ausgeführt werden, so dass in allen Richtungen parallel zu den Schichten ein Fluid zum Kühlen strömen kann.

FIG 6 zeigt eine Ausführung eines ersten magnetischen Pols 2 und eines weiteren magnetischen Pols 64. Die magnetisch aktiven Schichten 3 sind an den magnetisch inaktiven Schichten 9 befestigt. Die Befestigung kann durch einen Kleber zwischen den Oberflächen der magnetisch aktiven Schichten 3 und den der magnetisch inaktiven Schichten 9 erfolgen. Aufgrund der großen Flächen ist eine beständige und ebene Befestigung der magnetisch aktiven Schichten 3 auf den magnetisch inaktiven Schichten 9 möglich. Die magnetisch inaktiven Schichten 9 leiten einen großen Anteil der Kraft, die auf den magnetisch aktiven Schichten 3 wirkt, in eine Tragstruktur 61 ein. Um die Befestigung der magnetisch inaktiven Schichten 9 an der Tragstruktur 61 sowie die Einleitung der Kräfte auf die magnetisch inaktiven Schichten 9 in die Tragstruktur 61 sicherzustellen, wird eine kammartige Struktur 62 verwendet.

Eine Verbindung zwischen dem ersten magnetischen Pol 2 und dem weiteren magnetischen Pol 64 ist durch eine kammartige Struktur 63 realisiert.

Die kammartigen Strukturen 62, 63 können die Verbindung zwischen dem ersten magnetischen Pol 2 und dem weiteren magnetischen Pol 64 bzw. zwischen den magnetisch inaktiven Schichten 9 und der Tragstruktur 61 allein durch Formschluss ermöglichen. Je nach Erfordernis kann die Verbindung durch die kammartige Struktur 62 oder 63 durch ein kraftschlüssiges Mittel unterstützt werden. Dies kann insbesondere ein Kleber oder eine Oberflächenstruktur mit einer gewissen Rauigkeit sein.

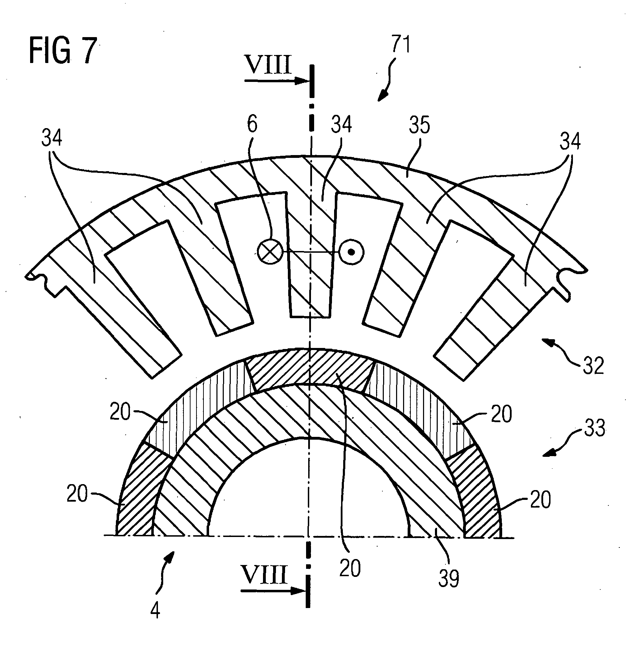

FIG 7 zeigt eine rotierende elektrische Maschine 71, die einen Stator 32 und einen Rotor 33 umfasst. Das Statorjoch 35, die Zähne 34, das Rotorjoch 39 und die Anordnung der Permanentmagnete 20 bzw. die Permanentmagnete 20 selbst sind in der Form und Funktion einem Design einer elektrischen rotierenden Maschine 71 angepasst.

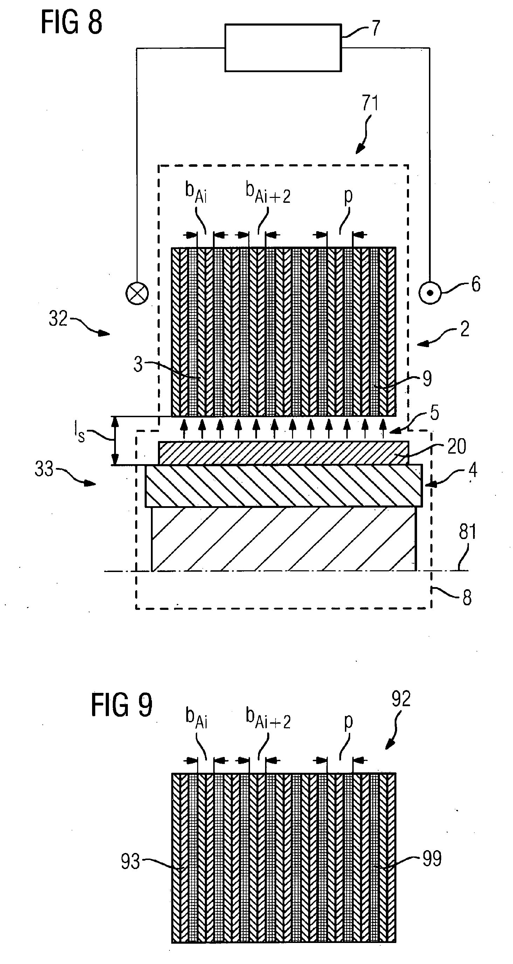

FIG 8 zeigt einen Querschnitt der rotierenden elektrischen Maschine 71 entlang der Linie VIII-VIII. Der Rotor 33 ist in der rotierenden elektrischen Maschine 71 um die Drehachse 81 drehbar gelagert. Insbesondere erstreckt sich entlang der Drehachse 81 eine Welle, die sich über Lager an einem Gehäuse der rotierenden elektrischen Maschine 71 abstützt.

Wird die rotierende elektrische Maschine 71 als Generator betrieben, wird über die Welle ein Drehmoment auf den Rotor 33 übertragen. Der Rotor 33 erzeugt durch die Permanentmagnete 20 in den magnetischen Polen des Stators 32, die einen Aufbau wie der erste magnetische Pol 2 aufweisen, einen Nutzfluss. Einzelne oder mehrere magnetische Pole des Rotors 32 sind von einem elektrischen Leiter 6, insbesondere als Windungen z.B. in der Form einer Zahnspule, umgeben. Durch die Drehung des Rotors 33 um die Drehachse 81 erfährt der Nutzfluss in einem oder mehreren der magnetischen Pole des Stators 32 eine Änderung. Diese Änderung erzeugt einen Strom in dem elektrischen Leiter 6, so dass im elektrischen Stromkreis 7 elektrische Energie vorhanden ist.

Bei einem Betrieb der rotierenden elektrischen Maschine 71 als Motor wird in den magnetischen Polen des Stators 32, die wie der erste magnetische Pol 2 aufgebaut sind, ein wechselnder Nutzfluss durch einen Strom im elektrischen Leiter 6 erzeugt. Der wechselnde Nutzfluss bewirkt, dass sich der Rotor 33 um die Drehachse 81 dreht und an die Welle, die mit dem Rotor 33 fest verbunden ist, ein Drehmoment abgibt. So wird elektrische Energie in mechanische Energie umgewandelt.

FIG 9 zeigt eine Ausführung eines magnetischen Polteils 92 zur Verwendung als einen ersten magnetischen Pol 2 für eine elektrische Maschine 1, 51, 101. Der magnetische Polteil 92 umfasst eine Anordnung von Schichten. Die Schichten umfassen magnetisch aktive Schichten 93 und magnetisch inaktive Schichten 99, wobei die magnetisch inaktiven Schichten 99 eine geringere mittlere Massendichte aufweisen als die magnetisch aktiven Schichten 93. Die Anordnung der Schichten weist eine Periode p auf. Die Periode p weist eine festgelegte Folge von magnetisch aktiven Schichten 93 und magnetisch inaktiven Schichten 99 auf. In FIG 1 beginnt die Periode p mit zwei aufeinander folgenden magnetisch aktiven Schichten 93 und endet mit einer magnetisch inaktiven Schicht 99. Die Anordnung der Schichten ist im Wesentlichen eine Wiederholung der Periode p. Der räumliche Anteil k, den man aus dem Gesamtvolumen $V_A$ der magnetisch aktiven Schichten 3 und dem Gesamtvolumen $V_i$ der magnetisch inaktiven Schichten 9 ermitteln kann, soll in FIG 11 zwei Drittel betragen. Der magnetische Polteil 92 ist zum Beispiel für die Verwendung als erster magnetischer Pol 2 in der Linearmaschine 31 und der rotierenden elektrischen Maschine 71 geeignet.

FIG 10 zeigt eine Windkraftanlage 104, die einen Mast 102 umfasst, der eine elektrische Maschine 101 trägt. Die elektrische Maschine 101 ist eine rotierende elektrische Maschine, deren Rotor 103 mit einem Flügel 100 mechanisch gekoppelt ist. Wenn ein Wind den Flügel 100 bewegt, wird eine rotierende Bewegung durch die mechanische Kopplung auf den Rotor 33, 103 übertragen. Durch die Bewegung des Rotors 33, 103 erzeugt die elektrische Maschine 1, 51, 101 elektrische Energie. Die Windkraftanlage 104 kann gemäß dem Stand der Technik ausgestattet sein. Dies bedeutet, dass an dem Rotor 33, 103 mehrere Flügel 100 angekoppelt sind, um die Windkraft optimal nutzen zu können. Des Weiteren kann auch die elektrische Maschine 1, 51, 101 in einer bei Windkraftanlagen üblichen Gondel am Ende des Mastes 102 untergebracht sein. Der Stator 32 der elektrischen Maschine 1, 51, 101, der von der Windkraftanlage 104 getragen wird, ist in einer erfindungsgemäßen Ausführung ausgeführt. Somit weist der Stator 32 eine gegenüber dem Stand der Technik reduzierte Masse auf. Somit muss die mechanische Konstruktion der Windkraftanlage 104 für geringere statische und dynamische Kräfte ausgelegt werden. Dies hat den Vorteil, dass die Windkraftanlage 104 kostengünstiger und/oder mit einer höheren Sicherheit an Stabilität gefertigt werden kann. Wenn magnetische Pole des Rotors 33, 103 erfindungsgemäß wie der erste magnetische Pol ausgeführt sind, so weist der Rotor 33, 103 ein geringeres Trägheitsmoment auf, so dass er schon bei geringeren Windkräften in Rotation versetzt werden kann. Somit kann mit der erfindungsgemäßen Ausführung der Windkraftanlage die Windenergie effektiver in elektrische Energie umgewandelt werden.

Eine erfindungsgemäße Ausführung eines Fahrzeugs ist ein Landfahrzeug, ein Wasserfahrzeug oder ein Luftfahrzeug, das erfindungsgemäße elektrische Maschinen 1, 51, 101 umfasst. Die Hilfsantriebe im Fahrzeug, z.B. für Scheibenheber oder Kühleinrichtung sind mit erfindungsgemäßen elektrischen Maschinen 1, 51, 101 ausgestattet. Weiterhin wird das Fahrzeug durch eine erfindungsgemäße elektrische Maschine 1, 51, 101 angetrieben, um das Fahrzeug in Bewegung zu setzen und diese Bewegung aufrecht zu erhalten.

In einer Ausführung des Fahrzeugs ist die erfindungsgemäße elektrische Maschine 1, 51, 101 der Hauptantrieb des Fahrzeugs, der im Wesentlichen alleine die Arbeit verrichtet, um das Fahrzeug in Bewegung zu setzen und die Bewegung aufrecht zu erhalten.

In einer weiteren Ausführung eines erfindungsgemäßen Fahrzeugs ist das Fahrzeug ein Wasserfahrzeug, Landfahrzeug oder Luftfahrzeug, das eine erfindungsgemäße elektrische Maschine als Teil eines Hybridantriebs aufweist.

**Patentansprüche**

1. Elektrische Maschine (1, 51, 101) umfassend

   - einen ersten magnetischen Pol (2), der eine Anordnung von Schichten aufweist, die magnetisch aktive Schichten (3) mit einem Gesamtvolumen $V_a$ umfasst,
   - einen zweiten magnetischen Pol (4), wobei der erste magnetische Pol (2) und der zweite magnetische Pol (4) relativ zueinander bewegbar sind, und
   - einen Spalt (5), der eine Länge $l_s$ in einer Richtung parallel zu einer der Schichten von einem den Spalt (5) begrenzenden Ende des ersten magnetischen Pols (2) zu einem den Spalt (5) begrenzenden Ende des zweiten magnetischen Pols (4) aufweist,
   - einen elektrischen Leiter (6) als Koppelelement zwischen einem elektrischen Stromkreis (7) und einem magnetischen Kreis (8),

   wobei in einem Betriebszeitpunkt der magnetische Kreis (8) den ersten magnetischen Pol (2), den Spalt (5) mit der Länge $l_s$ und den zweiten magnetischen Pol (4) umfasst, die von einem gemeinsamen magnetischen Nutzfluss zur elektromechanischen Energieumwandlung durchflutet werden, wobei die Anordnung magnetisch inaktive Schichten (9) mit einem Gesamtvolumen $V_i$ umfasst, die eine geringere mittlere Massedichte als die magnetisch aktiven Schichten (3) aufweisen, und eine Reihenfolge in der Anordnung der magnetisch inaktiven Schichten (9) und der magnetisch aktiven Schichten (3) im Wesentlichen durch eine Wiederholung einer Periode p vorgegeben ist, die eine festgelegte Folge von magnetisch aktiven Schichten (3) und magnetisch inaktiven Schichten (9) aufweist, wobei ein räumlicher Anteil k, der durch die Gleichung

$$k \;=\; V_a \;/\; (\; V_a + V_i \;);$$

definiert ist, die Bedingung

$$0,5 \;\leq\; k \;\leq\; 0,8;$$

erfüllt,
**dadurch gekennzeichnet, dass die magnetisch aktiven Schichten (3) Dicken $b_{Ai}$ aufweisen, die im Wesentlichen alle die Bedingung**

$$b_{Ai} \;\leq\; l_s/4 \dots l_s/20$$

erfüllen, in Abhängigkeit vom Maschinentyp der elektrischen Maschine oder ihrer Anwendung.

2. Elektrische Maschine (1, 51, 101) nach Anspruch 1, wobei in dem Spalt (5) an dem den Spalt begrenzenden Ende des zweiten magnetischen Pols (4) ein Permanentmagnet (20) angeordnet ist, der einen ersten und einen zweiten Permanentmagnetpol umfasst, wobei dessen erster Permanentmagnetpol dem begrenzenden Ende des zweiten magnetischen Pol (4) zugewandt ist.

3. Elektrische Maschine (1, 51, 101) nach einem der vorhergehenden Ansprüche, wobei die magnetisch inaktiven Schichten (9) Abstandshalter (52) sind.

4. Elektrische Maschine (1, 51, 101) nach einem der vorhergehenden Ansprüche, wobei die magnetisch aktiven Schichten (3) an den magnetisch inaktiven Schichten (9) befestigt sind.

5. Elektrische Maschine (1, 51, 101) nach einem der vorhergehenden Ansprüche, wobei die magnetisch inaktiven Schichten (9) durch eine kammartige Struktur (62, 63) mit einer Tragstruktur (61) und/oder wenigstens einem weiteren magnetischen Pol (64) verbunden sind.

6. Elektrische Maschine (1, 51, 101) nach einem der vorhergehenden Ansprüche, wobei die magnetisch inaktiven Schichten (9) den Raum zwischen den magnetisch aktiven Schichten (3) nicht komplett ausfüllen oder die magnetisch inaktiven Schichten (9) bündig zu den am Spalt (5) gelegenen Enden der magnetisch aktiven Schichten (3) angeordnet sind.

7. Elektrische Maschine (1, 51, 101) nach einem der vorhergehenden Ansprüche, umfassend einen Stator (32), der den ersten magnetischen Pol (2) aufweist und einen Rotor (33), der den zweiten magnetischen Pol (4) aufweist.

8. Elektrische Maschine (1, 51, 101) nach einem der Ansprüche 1 bis 6, umfassend einen Rotor (33), der den ersten magnetischen Pol (2) aufweist, und einen Stator (32), der den zweiten magnetischen Pol (4) umfasst.

9. Elektrische Maschine (1, 51, 101) nach Anspruch 7 oder 8, wobei die Elektrische Maschine (1, 51, 101) eine Linearmaschine (31) ist.

10. Elektrische Maschine (1, 51, 101) nach Anspruch 7 oder 8, wobei die Elektrische Maschine (1, 51, 101) eine rotierende elektrische Maschine (71) ist.

11. Magnetisches Polteil (92) zur Verwendung als einen ersten magnetischen Pol (2) für eine elektrische Maschine (1, 51, 101) nach einem der Ansprüche 1 bis **10,** der eine Anordnung von Schichten aufweist, die magnetisch aktive Schichten (93) mit einem Gesamtvolumen $V_a$ umfasst, **wobei die** Anordnung magnetisch inaktive Schichten (99) mit einem Gesamtvolumen $V_i$ umfasst, die eine geringere mittlere Massedichte als die magnetisch aktiven Schichten (93) aufweisen, und eine Reihenfolge in der Anordnung der magnetisch inaktiven Schichten (99) und der magnetisch aktiven Schichten (93) im Wesentlichen durch eine Wiederholung einer Periode p vorgegeben ist, die eine festgelegte Folge von magnetisch aktiven Schichten (93) und magnetisch inaktiven Schichten (99) aufweist, wobei ein räumliche Anteil k, der durch die Gleichung

$$k = V_a / (V_a + V_i);$$

definiert ist, die Bedingung

$$0,5 \leq k \leq 0,8;$$

erfüllt,
**dadurch gekennzeichnet, dass die magnetisch aktive Schichten (3) Dicken $b_{Ai}$ aufweisen, die im Wesentlichen alle die Bedingung**

$$b_{Ai} \leq l_s/4 \ldots l_s/20$$

erfüllen, in Abhängigkeit vom Maschinentyp der elektrischen Maschine oder ihrer Anwendung.

12. Fahrzeug umfassend eine elektrische Maschine (1, 51, 101) nach einem der Ansprüche 1 bis 10

13. Windkraftanlage (104) umfassend eine elektrische Maschine (1, 51, 101) nach Anspruch **10,** die einen Flügel (100) umfasst, der mit dem Rotor (33, 103) der elektrischen Maschine (1, 51, 101) mechanisch gekoppelt ist.

14. Verfahren zur Herstellung einer elektrische Maschine (1, 51, 101) nach einem der Ansprüche 1 bis 10, wobei

- magnetisch inaktive Schichten (9), die eine geringere mittlere Massedichte als die magnetisch aktiven Schichten (3) aufweisen, ausgewählt werden,
- der räumliche Anteil k gemäß der Bedingung

$$0,5 \leq k \leq 0,8$$

festgelegt wird,
- eine Folge einer Periode p von magnetisch aktiven Schichten (93) und magnetisch inaktiven Schichten (9, 99) festgelegt wird, und
- die Anordnung, die die magnetisch aktiven Schichten und die magnetisch inaktive Schichten (9, 99) umfasst, im Wesentlichen durch eine Wiederholung der Periode p festgelegt wird, **dadurch gekennzeichnet, dass**
- **die Dicken der magnetisch aktive Schichten (3) festgelegt werden, so dass die Bedingung**

$$b_{Ai} \leq l_s/4 \ldots l_s/20$$

erfüllt wird, in Abhängigkeit vom Maschinentyp der elektrischen Maschine oder ihrer Anwendung.

## Claims

1. Electric machine (1, 51, 101) comprising

   - a first magnetic pole (2), which has an arrangement of layers which comprises magnetically active layers (3) with a total volume $V_a$,
   - a second magnetic pole (4), wherein the first magnetic pole (2) and the second magnetic pole (4) can be moved relative to one another, and
   - a gap (5) which has a length $l_S$ in a direction parallel to one of the layers from an end of the first magnetic pole (2) bounding the gap (5) to an end of the second magnetic pole (4) bounding the gap (5),
   - an electrical conductor (6) as a coupling element between an electrical circuit (7) and a magnetic circuit (8),

   wherein at an operating time the magnetic circuit (8) comprises the first magnetic pole (2), the gap (5) with length $l_S$ and the second magnetic pole (4), through all of which a common useful magnetic flux flows for electromechanical energy conversion, wherein the arrangement comprises magnetically inactive layers (9) with a total volume $V_i$ which have a lower average density than the magnetically active layers (3), and a sequence in the arrangement of the magnetically inactive layers (9) and the magnetically active layers (3) is essentially specified by a repetition of a period p which has a defined order of magnetically active layers (3) and magnetically inactive layers (9), wherein a spatial component k which is defined by the equation

$$k = V_a / ( V_a + V_i );$$

   fulfils the condition

$$0.5 \leq k \leq 0.8;$$

   **characterised in that** the magnetically active layers (3) have thicknesses $b_{Ai}$ which essentially all fulfil the condition

$$b_{Ai} \leq l_S/4 ... l_S/20$$

   as a function of the machine type of the electric machine or of its application.

2. Electric machine (1, 51, 101) according to claim 1, wherein in the gap (5) a permanent magnet (20) is arranged at the end of the second magnetic pole (4) bounding the gap (5), and comprises a first and a second permanent-magnet pole, wherein its first permanent-magnet pole faces the bounding end of the second magnetic pole (4).

3. Electric machine (1, 51, 101) according to one of the preceding claims, wherein the magnetically inactive layers (9) are spacers (52).

4. Electric machine (1, 51, 101) according to one of the preceding claims, wherein the magnetically active layers (3) are fixed to the magnetically inactive layers (9).

5. Electric machine (1, 51, 101) according to one of the preceding claims, wherein the magnetically inactive layers (9) are connected by a comb-like structure (62, 63) to a support structure (61) and/or at least one further magnetic pole (64).

6. Electric machine (1, 51, 101) according to one of the preceding claims, wherein the magnetically inactive layers (9) do not completely occupy the space between the magnetically active layers (3) or the magnetically inactive layers (9) are arranged flush to the ends of the magnetically active layers (3) situated at the gap (5).

7. Electric machine (1, 51, 101) according to one of the preceding claims, comprising a stator (32) which has the first magnetic pole (2), and a rotor (33) which has the second magnetic pole (4).

8. Electric machine (1, 51, 101) according to one of claims 1 to 6, comprising a rotor (33) which has the first magnetic pole (2), and a stator (32) which comprises the second magnetic pole (4).

9. Electric machine (1, 51, 101) according to claim 7 or 8, wherein the electric machine (1, 51, 101) is a linear machine (31).

10. Electric machine (1, 51, 101) according to claim 7 or 8, wherein the electric machine (1, 51, 101) is a rotary electric machine (71).

11. Magnetic pole part (92) for use as a first magnetic pole (2) for an electric machine (1, 51, 101) according to one of claims 1 to 10, which has an arrangement of layers which comprises magnetically active layers (93) with a total volume $V_a$, wherein the arrangement comprises magnetically inactive layers (99) with a total volume $V_i$ which have a lower average density than the magnetically active layers (93), and a sequence in the arrangement of the magnetically inactive layers (99) and the magnetically active layers (93) is essentially specified by a repetition of a period p which has a defined order of magnetically active layers (93) and magnetically inactive layers (99), wherein a spatial component k which is defined by the equation

$$k = V_a / (V_a + V_i);$$

fulfils the condition

$$0.5 \leq k \leq 0.8;$$

**characterised in that** the magnetically active layers (3) have thicknesses $b_{Ai}$ which essentially all fulfil the condition

$$b_{Ai} \leq l_S/4 \ldots l_S/20$$

as a function of the machine type of the electric machine or of its application.

**12.** Vehicle comprising an electric machine (1, 51, 101) according to one of claims 1 to 10.

**13.** Wind turbine (104) comprising an electric machine (1, 51, 101) according to claim 10, which comprises a blade (100) which is mechanically coupled to the rotor (33, 103) of the electric machine (1, 51, 101).

**14.** Method for producing an electric machine (1, 51, 101) according to one of claims 1 to 10, wherein

- magnetically inactive layers (9) which have a lower average density than the magnetically active layers (3) are selected,
- the spatial component k is defined in accordance with the condition

$$0.5 \leq k \leq 0.8$$

- an order of a period p of magnetically active layers (93) and magnetically inactive layers (9, 99) is specified, and
- the arrangement which comprises the magnetically active layers and the magnetically inactive layers (9, 99) is essentially specified by a repetition of a period p,
**characterised in that**
- the thicknesses $b_{Ai}$ of the magnetically active layers (3) are specified, so that the condition

$$b_{Ai} \leq l_S/4 \ldots l_S/20$$

is fulfilled as a function of the machine type of the electric machine or of its application.

**Revendications**

**1.** Machine (1, 51, 101) électrique comprenant :

un premier pôle (2) magnétique, qui a un agencement de couches, qui comprend des couches (3) actives magnétiquement ayant un volume $V_a$ d'ensemble,
un deuxième pôle (4) magnétique, le premier pôle (2) magnétique et le deuxième pôle (4) magnétique pouvant être déplacés l'un par rapport à l'autre et
un entrefer (5) qui a une longueur $l_s$ dans une direction parallèlement à l'une des couches d'une extrémité délimitant l'entrefer (5) du premier pôle (2) magnétique à une extrémité délimitant l'entrefer (5) du deuxième pôle (4) magnétique,
un conducteur (6) électrique comme élément de couplage entre un circuit (7) électrique et un circuit (8) magnétique,
dans laquelle, à un instant de fonctionnement, le circuit (8) magnétique comprend le premier pôle (2) magnétique, l'entrefer (5) de longueur $l_s$ et le deuxième pôle (4) magnétique, qui sont traversés par un flux utile magnétique commun pour la transformation électromécanique de l'énergie, l'agencement comprenant des couches (9) inactives magnétiquement ayant un volume $V_i$ d'ensemble, qui ont une masse volumique moyenne plus petite que celle des couches (3) actives magnétiquement, et il est prescrit une succession de l'agencement des couches (9) inactives magnétiquement et des couches (3) actives magnétiquement essentiellement par une répétition d'une période p qui a une suite fixée de couches (3) actives magnétiquement et de couches (9) inactives magnétiquement, une proportion k dans l'espace qui est définie par l'équation

$$k = V_a / (v_a + V_i);$$

satisfaisant la condition

$$0,5 \leq k \leq 0,8;$$

**caractérisé en ce que**,
les couches (3) actives magnétiquement ont des épaisseurs $b_{Ai}$ qui satisfont sensiblement toutes les conditions

$$b_{Ai} \leq l_s/4...l_s/20$$

en fonction du type de la machine électrique ou de son application.

2. Machine (1, 51, 101) électrique suivant la revendication 1, dans laquelle, dans l'entrefer (5) est disposé, à l'extrémité délimitant l'entrefer du deuxième pôle (4) magnétique, un aimant (20) permanent, qui comprend un premier et un deuxième pôles d'aimant permanent, dont le premier pôle d'aimant permanent est tourné vers l'extrémité de délimitation du deuxième pôle (4) magnétique.

3. Machine (1, 51, 101) électrique suivant l'une des revendications précédentes, dans laquelle les couches inactives magnétiquement sont des entretoises (52).

4. Machine (1, 51, 101) électrique suivant l'une des revendications précédentes, dans laquelle les couches actives magnétiquement sont fixées aux couches (9) inactives magnétiquement.

5. Machine (1, 51, 101) électrique suivant l'une des revendications précédentes, dans laquelle les couches (9) inactives magnétiquement sont reliées par une structure (62, 63) en peigne à une structure (61) porteuse et/ou au moins à un autre pôle (64) magnétique.

6. Machine (1, 51, 101) électrique suivant l'une des revendications précédentes, dans laquelle les couches (9) inactives magnétiquement ne remplissent pas complètement l'espace compris entre les couches (3) actives magnétiquement ou les couches (9) inactives magnétiquement sont au ras des extrémités, tournées vers l'entrefer (5), des couches (3) actives magnétiquement.

7. Machine (1, 51, 101) électrique suivant l'une des revendications précédentes, comprenant un stator (32), qui a le premier pôle (2) magnétique, et un rotor (33), qui a le deuxième pôle (4) magnétique.

8. Machine (1, 51, 101) électrique suivant l'une des revendications 1 à 6, comprenant un rotor (33), qui a le premier pôle (2) magnétique, et un stator (32), qui a le deuxième pôle (4) magnétique.

9. Machine (1, 51, 101) électrique suivant la revendication 7 ou 8, dans laquelle la machine (1, 51, 101) électrique est une machine (31) linéaire.

10. Machine (1, 51, 101) électrique suivant la revendication 1, dans laquelle la machine (1, 51, 101) électrique est une machine (71) électrique tournante.

11. Pièce (92) polaire magnétique à utiliser comme premier pôle (2) magnétique pour une machine (1, 51, 101) électrique suivant l'une des revendications 1 à 10, qui a un agencement de couches qui comprend des couches (93) actives magnétiquement ayant un volume $V_a$ d'ensemble, l'agencement comprenant des couches (99) inactives magnétiquement ayant un volume $V_i$ d'ensemble, qui ont une masse volumique moyenne plus petite que les couches (93) actives magnétiquement et une succession dans l'agencement des couches (99) inactives magnétiquement et des couches (93) actives magnétiquement est prescrite sensiblement par une répétition d'une période p, qui a une suite fixée de couches (93) actives magnétiquement et de couches (99) inactives magnétiquement, une proportion k dans l'espace étant définie par l'équation

$$k = V_a / (V_a + V_i) ;$$

la condition

$$0,5 \leq k \leq 0,8 ;$$

étant satisfaite,
**caractérisée en ce que** les couches (3) actives magnétiquement ont des épaisseurs $b_{Ai}$ qui satisfont sensiblement toute la condition

$$b_{Ai} \leq l_s/4...l_s/20$$

en fonction du type de la machine électrique ou de son application.

12. Véhicule comprenant une machine (1, 51, 101) électrique suivant l'une des revendications 1 à 10.

13. Eolienne (104) comprenant une machine (1, 51, 101) électrique suivant la revendication 10, qui comprend une aile (100) couplée mécaniquement au rotor (33, 103) de la machine (1, 51, 101) électrique.

14. Procédé de fabrication d'une machine (1, 51, 101) électrique suivant l'une des revendications 1 à 10, dans lequel

on sélectionne des couches (9) inactives magnétiquement, qui ont une masse volumique moyenne plus petite que les couches (3) actives magnétiquement,

on fixe la proportion k dans l'espace suivant la condition

$$0,5 \leq k \leq 0,8$$

on fixe une suite de période p de couches (93) actives magnétiquement et de couches (9, 99) inactives magnétiquement et

on fixe l'agencement, qui comprend les couches actives magnétiquement et les couches (9, 99) inactives magnétiquement, essentiellement par une répétition de la période p,

**caractérisé en ce que**

on fixe les épaisseurs $b_{Ai}$ des couches (3) actives magnétiquement de manière à satisfaire la condition

$$b_{Ai} \leq l_s/4 \ldots l_s/20$$

en fonction du type de la machine électrique et de son application.

EP 2 721 722 B1

**FIG 1**

7

1

$b_{Ai}$   $b_{Ai+2}$   p

⊗

⊙ 6

2

3

9

$l_s$

5

4

8

18

EP 2 721 722 B1

FIG 2

19

## FIG 3

## FIG 4

FIG 5

FIG 6

FIG 7

FIG 8

$b_{Ai}$   $b_{Ai+2}$   $p$

71

7

32

3

$l_s$

33

5

20

4

81

8

9

2

6

FIG 9

$b_{Ai}$   $b_{Ai+2}$   $p$

92

93

99

FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0237848 A

**In der Beschreibung aufgeführte Nicht-Patentliteratur**

- **BRAND ; STAHEL ; VEZZINI.** *antriebstechnik 5/2011,* Mai 2011, 68-70